# FASCICULE DE BREVET EUROPEEN

(11) **EP 4 155 596 B1**
(45) Date de publication et mention de la délivrance du brevet: **19.06.2024**
(21) Numéro de dépôt: 22197330.8
(22) Date de dépôt: 23.09.2022
(51) Int. Cl.: F16L 37/56, F16L 41/12

(54) **ENSEMBLE DE CONNEXION ET ENSEMBLE DE REFROIDISSEMENT**
VERBINDUNGSANORDNUNG UND KÜHLANORDNUNG
CONNECTION ASSEMBLY AND COOLING ASSEMBLY

(30) Priorité: 24.09.2021 FR 2110074
(43) Date de publication de la demande: 29.03.2023
(73) Titulaire: Staubli Faverges, 74210 Faverges-Seythenex (FR)
(72) Inventeur: DURIEUX, Christophe, 73200 GILLY SUR ISERE (FR); MOREL, Frédéric, 74210 LATHUILE (FR)
(74) Mandataire: Lavoix

(56) Documents cités:
- EP-A1- 2 623 916
- EP-A1- 2 966 396
- US-A- 4 171 559
- US-A- 5 354 103

## Description

La présente invention concerne un ensemble de connexion, et un ensemble de thermorégulation comprenant un tel ensemble de connexion.

Dans le domaine des circuits de thermorégulation conçus pour réguler la température d'une plaque d'échange thermique, par exemple dans le domaine des circuits de refroidissement conçus pour refroidir une plaque d'échange thermique dite « plaque froide », il est connu de connecter une telle plaque à un ensemble de connexion, de manière à établir entre eux une connexion fluidique pour faire circuler un fluide de thermorégulation. L'ensemble de connexion comprend au moins deux éléments de raccord fluidiques, par exemple des éléments mâles, tandis que la plaque froide comprend au moins deux éléments de raccord fluidiques complémentaires, par exemple des éléments femelles, chaque élément de raccord complémentaire étant agencé pour être accouplé à un élément de raccord fluidique respectif.

Cependant, à cause des tolérances de fabrication et d'assemblage, les éléments de raccord de l'ensemble de connexion et les éléments complémentaires de la plaque d'échange thermique ne sont en général pas parfaitement alignés, ce qui augmente le risque de coincement et/ou l'usure lors de la connexion d'un ensemble de connexion et de la plaque associée.

Il est connu de prévoir un élément de raccord à débattement latéral pour compenser les défauts d'alignement de cet élément de raccord lors de la connexion à l'élément de raccord complémentaire.

Selon des exemples connus :
- EP-2 966 396-A1 décrit, par exemple, un ensemble de connexion comprenant deux éléments de raccord montés à premier débattement dans une bride commune, de manière à compenser les défauts d'alignement, cette bride commune étant montée dans un support de manière à permettre un deuxième débattement latéral sur une grande amplitude. Une telle structure d'ensemble de connexion reste cependant trop encombrante pour certains usages, notamment lorsqu'un entraxe entre deux éléments de raccords adjacents est réduit, par exemple inférieur ou égal à 25 mm, et qu'un défaut d'écartement existe entre les éléments de raccord et les éléments de raccord complémentaires.
- US-5 354 103-A décrit un dispositif de connexion de type femelle, configuré pour retenir des éléments de raccord mâles, munis d'une saillie radiale de retenue, par l'intermédiaire d'une plaque d'encliquetage, sans aucune possibilité de débattement latéral ou d'inclinaison.
- EP-2 623 916-A1 décrit des blocs de connexion comprenant des éléments mâles de raccord vissés dans une plaque, sans aucune possibilité de débattement latéral ou d'inclinaison des éléments mâles.
- US-4 171 559-A décrit, quant à lui, un bloc de connexion prévu pour recevoir des éléments mâles. Le bloc de connexion comprend une plaque de verrouillage, pour la fixation ou le démontage des éléments mâles, sans aucune possibilité de débattement latéral ou d'inclinaison des éléments mâles.

C'est à ces problèmes qu'entend plus particulièrement remédier l'invention, en proposant un ensemble de connexion qui permette de compenser les défauts d'alignements et d'écartement tout en restant compact.

À cet effet, l'invention concerne un ensemble de connexion, configuré pour être accouplé à une plaque froide et comprenant :
- une bride, traversée par au moins deux orifices internes, qui sont chacun centrés sur un axe d'orifice, les axes d'orifice étant parallèles entre eux, la bride comprenant une surface avant tournée vers l'avant selon une direction longitudinale parallèle aux axes d'orifice et une surface arrière tournée vers l'arrière, les surfaces avant et arrière étant parallèles à un plan transversal, qui est transversal aux axes d'orifice,
- un couvercle, configuré pour être fixé à un support dans une configuration montée de l'ensemble de connexion, le support comprenant des sorties de conduit, chaque sortie de conduit étant associée à un orifice interne respectif,
dans lequel :
- en configuration montée de l'ensemble de connexion, la surface arrière de la bride est située en regard d'une face avant du support dans la direction longitudinale, tandis que la surface avant de la bride est située en regard d'une surface arrière du couvercle dans la direction longitudinale,
- chaque orifice interne comprend une embouchure arrière, qui débouche sur la surface arrière de la bride et qui est en communication fluidique avec la sortie de conduit correspondante,
- l'ensemble de connexion comprend en outre :
   - des premiers joints d'étanchéité, qui, en configuration montée de l'ensemble de connexion, sont interposés entre la surface arrière de la bride et la face avant du support en regard, chaque premier joint d'étanchéité entourant une sortie de conduit respective et l'embouchure arrière associée,
   - au moins deux éléments de raccord fluidique, chaque élément de raccord fluidique comprenant un corps mâle traversé par un conduit interne, chaque corps mâle comprenant une partie avant tubulaire et une partie arrière,
- chaque partie arrière est reçue dans un orifice interne respectif de la bride, tandis que chaque partie avant tubulaire dépasse sur l'avant de la bride à travers une ouverture du couvercle, chaque corps mâle étant configuré pour venir en butée sur l'avant contre la bride,
- chaque partie avant tubulaire est configurée pour être accouplée avec un élément de raccord fluidique complémentaire appartenant à la plaque,
- le conduit interne de chaque corps mâle est en permanence en communication fluidique avec l'embouchure arrière de l'orifice interne correspondant.
Selon l'invention :
- en configuration montée de l'ensemble de connexion, la bride est déplaçable par rapport au couvercle uniquement selon un mouvement porté par le plan transversal,
- pour chaque corps mâle, l'ensemble de connexion comprend un deuxième joint d'étanchéité, qui est interposé radialement entre chaque corps mâle et une surface radiale interne de l'orifice interne correspondant,
- chaque corps mâle est monté dans l'orifice interne correspondant avec possibilité d'inclinaison par rapport à l'axe d'orifice correspondant.

Grâce à l'invention, l'ensemble de connexion comprend, pour chaque élément de raccord fluidique, à la fois un premier dispositif de compensation permettant un débattement latéral, et ce dans toutes les directions portées par le plan transversal, et un deuxième dispositif de compensation, découplé du premier dispositif de compensation, permettant un débattement angulaire de chaque élément de raccord dans la bride, une telle structure étant particulièrement compacte.

Selon des aspects avantageux mais non obligatoires de l'invention, un tel ensemble de connexion peut incorporer une ou plusieurs des caractéristiques suivantes prises isolément ou selon toute combinaison techniquement admissible :
- En configuration désaccouplée, chaque corps mâle a une possibilité de mouvement dans l'orifice interne respectif de la bride selon l'axe d'orifice correspondant.
- Pour chaque corps mâle, une surface axiale interne de la bride qui délimite l'orifice interne correspondant est en regard vers l'avant d'une surface arrière du corps mâle.
- La partie arrière de chaque corps mâle comprend une collerette externe, ménagée en saillie par rapport à la partie avant tubulaire dans une direction radiale à un axe central du corps mâle correspondant, et en ce que chaque deuxième joint d'étanchéité est interposé radialement entre la bride et la collerette externe correspondante.
- La bride comprend au moins un corps arrière et un corps avant, qui sont logés l'un dans l'autre, le corps arrière délimitant l'embouchure arrière de l'orifice interne, le corps avant délimitant la surface avant de la bride, la collerette externe du corps mâle étant montée selon l'axe d'orifice entre le corps avant et le corps arrière.
- Chaque premier joint d'étanchéité est interposé longitudinalement entre une surface du corps arrière délimitant la surface arrière de la bride et le support, chaque premier joint d'étanchéité étant de préférence logé dans une gorge respective ménagée dans le corps arrière.
- Chaque deuxième joint d'étanchéité est interposé radialement entre une surface radiale interne de l'orifice interne formée sur le corps arrière de la bride et la collerette externe, chaque deuxième joint étant de préférence logé dans une gorge périphérique externe respective de la collerette externe.
- La bride comprend au moins un corps arrière par élément de raccord fluidique, chaque corps arrière étant logé dans une cavité cylindrique respective ménagée dans le corps avant de la bride.
- L'orifice interne comprend un premier volume délimité par une première surface radiale interne de la bride, logeant partiellement la partie avant tubulaire et débouchant vers l'avant sur la surface avant de la bride et vers l'arrière sur un deuxième volume de l'orifice interne, le deuxième volume étant délimité par une deuxième surface radiale interne de la bride et logeant la collerette externe, tandis qu'une longueur de la première surface radiale interne est supérieure à une longueur de la deuxième surface radiale interne.
- Chaque élément de raccord fluidique comprend :
   - une soupape mobile dans le conduit interne par rapport au corps mâle,
   - un ressort, logé dans le conduit interne et qui repousse la soupape dans une position de fermeture du conduit interne, dans laquelle la soupape est en contact étanche avec la partie avant tubulaire et obture le conduit interne, et
   - une bague d'interface, reçue dans le conduit interne,
      tandis que, et en ce que, en configuration montée de l'ensemble de connexion, le ressort est en appui arrière sur la bague d'interface, elle-même en appui arrière contre la bride.
- L'embouchure arrière diverge de l'axe d'orifice de l'orifice interne correspondant vers l'arrière.
- En configuration montée de l'ensemble de connexion, une distance minimale entre deux premiers joints d'étanchéité adjacents est supérieure à un débattement maximum de la bride par rapport au couvercle dans une direction parallèle au plan transversal.
- En configuration désaccouplée, chaque deuxième joint d'étanchéité rappelle le corps mâle correspondant dans une position dans laquelle un axe central du corps mâle est sensiblement aligné avec l'axe d'orifice correspondant.
- Le couvercle comprend :
   - une jupe qui délimite un logement de réception de la bride radialement à la direction longitudinale, et
   - une paroi avant, qui comprend au moins autant d'ouvertures que l'ensemble de connexion comprend de parties avant tubulaires.

L'invention concerne aussi un ensemble de thermorégulation, notamment de refroidissement, comprenant :
- un support, dans lequel sont ménagées aux moins deux sorties de conduit,
- un ensemble de connexion tel que décrit précédemment, le couvercle étant fixé au support en configuration montée de l'ensemble de connexion, et
- une plaque, sur laquelle sont fixées au moins deux éléments de raccord complémentaires, chacun configuré pour s'accoupler avec un élément de raccord fluidique respectif de l'ensemble de connexion.

L'invention sera mieux comprise, et d'autres avantages de celle-ci apparaîtront plus clairement à la lumière de la description qui va suivre, de trois modes de réalisation d'un ensemble de connexion et d'un ensemble de thermorégulation, conformes à son principe, donnée uniquement à titre d'exemple et faite en référence aux dessins annexés, dans lesquels :
- [Fig 1] la figure 1 est une coupe longitudinale d'un ensemble de connexion conforme à un premier mode de réalisation de l'invention, représenté dans une configuration désaccouplée ;
- [Fig 2] la figure 2 est une vue en perspective d'un éclaté de l'ensemble de connexion de la figure 1, certains éléments étant omis pour faciliter la lecture ;
- [Fig 3] la figure 3 est une coupe longitudinale d'un ensemble de thermorégulation conforme à l'invention, représenté dans une configuration en cours d'accouplement et comprenant l'ensemble de connexion de la figure 1 et un ensemble complémentaire ;
- [Fig 4] la figure 4 est une coupe longitudinale de l'ensemble de thermorégulation de la figure 3, représenté dans une configuration accouplée ;
- [Fig 5] la figure 5 est une vue à plus grande échelle du détail V de la figure 4 ;
- [Fig 6] la figure 6 est une coupe longitudinale d'un ensemble de connexion conforme à un deuxième mode de réalisation de l'invention, représenté en configuration désaccouplée ;
- [Fig 7] la figure 7 est une coupe longitudinale d'un ensemble de connexion conforme à un troisième mode de réalisation de l'invention, représenté dans une configuration désaccouplée, et
- [Fig 8] la figure 8 est une vue en perspective d'un éclaté de l'ensemble de connexion de la figure 7, certains éléments étant omis pour faciliter la lecture.

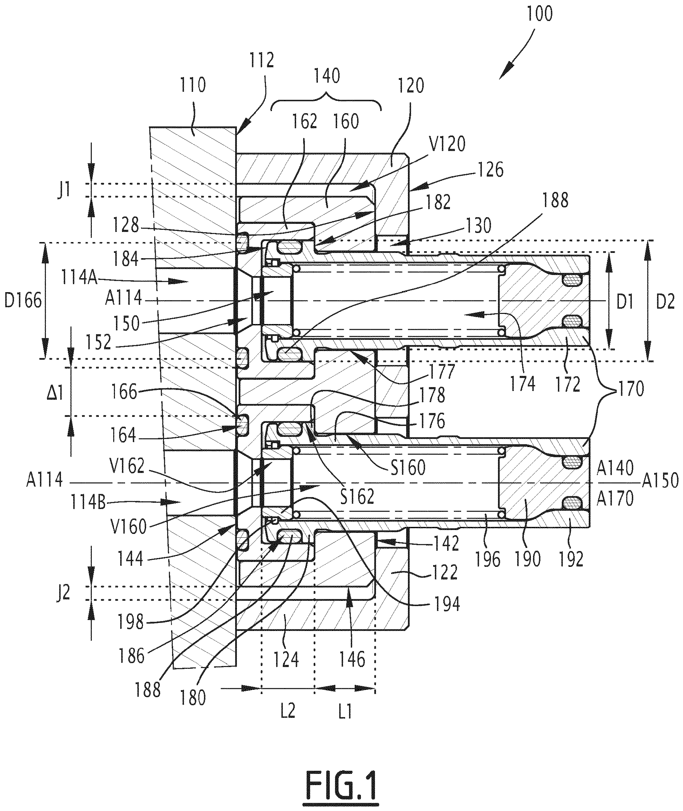

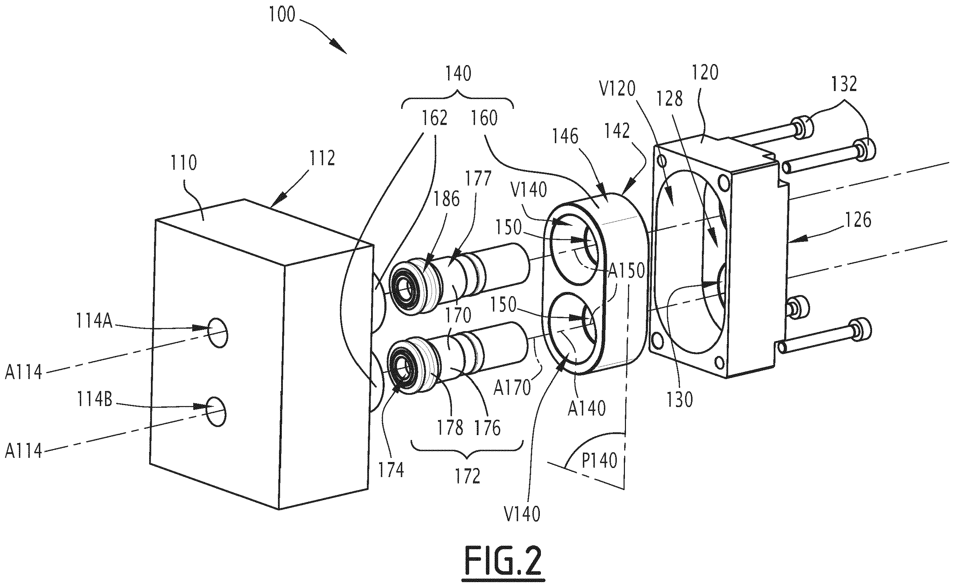

Un ensemble de connexion 100 est représenté en coupe sur la figure 1, et en perspective éclatée sur la figure 2. L'ensemble de connexion 100 est ici représenté dans une configuration montée sur un support 110, qui ne fait pas partie de l'ensemble de connexion 100 mais qui contribue à sa mise en oeuvre.

Le support 110 comprend une face avant 112, qui est considérée comme plane. Dans la suite de la description de l'ensemble de connexion 100 ou du support 110, les directions « avant » ou « arrière » sont données en référence à un axe longitudinal, la direction longitudinale avant ou « vers l'avant » étant tournée dans un sens d'accouplement de l'ensemble de connexion 100 avec une plaque 300. La plaque 300 est décrite plus loin dans la description. La direction longitudinale arrière ou « vers l'arrière » est opposée à la direction longitudinale avant. En référence aux dessins, la direction longitudinale avant est orientée vers la droite des dessins, sachant qu'il peut en être autrement dans la réalité. Une surface de l'ensemble de connexion 100 ou du support 110 dite « avant » est tournée dans la direction longitudinale avant tandis qu'une surface dite « arrière » est tournée dans la direction longitudinale arrière.

Le support 110 comprend un conduit, qui est ménagé dans le support 110 et qui débouche sur la face avant 112 par deux sorties de conduit 114A et 114B. Chaque sortie de conduit 114A ou 114B présente ici une forme cylindrique de section circulaire centrée sur un axe de sortie A114, qui est perpendiculaire à la face avant 112. Autrement dit les axes de sorties A114 associés aux sorties de conduit 114A et 114B sont parallèles entre eux.

L'ensemble de connexion 100 comprend aussi un couvercle 120 et une bride 140.

Le couvercle 120 est configuré pour être fixé au support 110 dans la configuration montée de l'ensemble de connexion 100, dans laquelle le couvercle 120 ménage avec le support 110 un logement de réception V120 de la bride 140.

Le couvercle 120 présente, dans le premier mode de réalisation de l'invention, une forme globalement parallélépipédique avec une paroi avant 122, de forme rectangulaire, et une jupe 124.

La paroi avant 122 est globalement plane et comprend une surface avant 126 et une surface arrière 128, opposée de la surface avant 126. En configuration montée de l'ensemble de connexion 100, la surface arrière 128 est orientée vers le support 110 et parallèle à la face avant 112 du support 110. La jupe 124 s'étend au niveau d'une périphérie de la paroi avant 122 du côté de la surface arrière 128. Le logement de réception V120 présente ici une forme cylindrique de section oblongue centrée sur un axe orthogonal à la paroi avant 122.

Des ouvertures 130, ici au nombre de deux, sont ménagées au travers de la paroi avant 122, reliant la surface avant 126 à la surface arrière 128. Autrement dit, le logement de réception V120 débouche sur la surface avant 126 par les ouvertures 130. En configuration montée de l'ensemble de connexion, chaque ouverture 130 est alignée sur un axe de sortie A114 respectif, tandis que les sorties de conduit 114A et 114B débouchent dans le logement de réception V120. Dans l'exemple illustré, le couvercle 120 est fixé au support 110 au moyen de quatre vis de fixation 132. De manière générale, le couvercle 120 est fixé au support 110 sans possibilité de mouvement par rapport au support 110.

La bride 140 comprend une surface avant 142, une surface arrière 144 tournée à l'opposé de la surface avant, et une surface périphérique externe 146, qui relie la surface avant 142 à la surface arrière 144. Les surfaces avant 142 et arrière 144 sont ici planes, parallèles entre elles et orthogonales à un axe longitudinal A140 de la bride 140. La surface périphérique externe 146 délimite la bride 140 dans une direction radiale à l'axe longitudinal A140. Les surfaces avant 142 et arrière 144 s'étendent parallèlement à un plan transversal P140, qui est transversal à l'axe longitudinal A140, en particulier radial à l'axe longitudinal A140, c'est-à-dire orthogonal à l'axe longitudinal A140. La bride 140 présente ici une forme externe globalement cylindrique de section oblongue prise dans le plan transversal P140 et s'étendant selon l'axe longitudinal A140.

En configuration montée de l'ensemble de connexion 100, la bride 140 est reçue dans le logement de réception V120, la surface arrière 144 de la bride 140 étant située en regard vers l'arrière de la face avant 112 du support 110 dans une direction longitudinale, c'est-à-dire dans une direction parallèle à l'axe longitudinal A140, tandis que la surface avant 142 de la bride 140 est située en regard vers l'avant de la surface arrière 128 du couvercle 120 dans la direction longitudinale. En configuration montée de l'ensemble de connexion 100, la jupe 124 délimite, radialement à la direction longitudinale, le logement de réception V120, tandis que parallèlement à l'axe longitudinal A140, le logement de réception V120 est délimité entre la face avant 112 du support 110 et la surface arrière 128 de la paroi avant 122 du couvercle 120. L'axe longitudinal A140 de la bride 140 est ici parallèle aux axes de sorties A114.

La face avant 112 du support 110 est donc parallèle à la surface arrière 128 du couvercle 120, la bride 140 étant prise en sandwich entre la face avant 112 du support 110 et la surface arrière 128 du couvercle 120. Un jeu est ménagé autour de la bride 140 entre la surface périphérique externe 146 et la jupe 124, longitudinalement entre la bride 140 et le couvercle 120 et longitudinalement entre la bride 140 et le support 110, de manière qu'en configuration montée de l'ensemble de connexion 100, la bride 140 est déplaçable par rapport au couvercle 120 uniquement selon un mouvement porté par le plan transversal P140. Ce mouvement peut être un mouvement de translation, dans n'importe quelle direction parallèle au plan transversal P140, ainsi qu'un mouvement de rotation autour d'un axe de rotation parallèle à l'axe longitudinal A140. Les mouvements de translation et de rotation peuvent être combinés. Ces mouvements sont limités lorsque la bride 140 vient en butée contre la jupe 140.

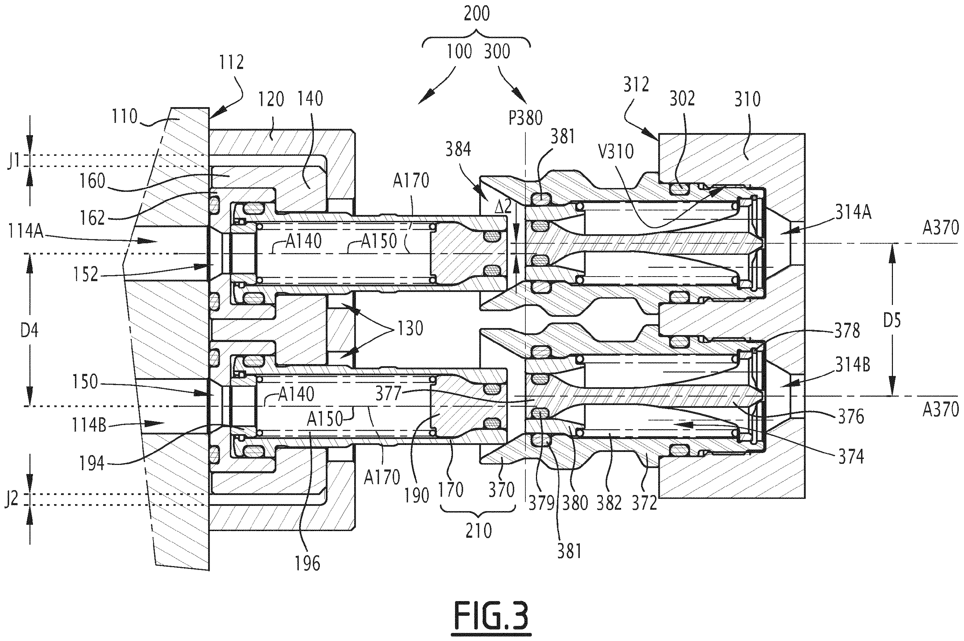

Sur les figures 1 et 3, la bride 140 est représentée dans une position dite « neutre », dans laquelle la bride 140 est centrée dans le logement de réception V120. La bride 140 et le volume de réception V120 sont de préférence conçus de manière qu'en position neutre, une distance prise parallèlement au plan transversal P140 entre n'importe quel point de la surface périphérique externe 146 et la jupe 124 en regard de ce point est constante. Autrement dit le jeu entre la surface périphérique externe 146 et la jupe 124 est constant tout autour de la bride 140.

La bride 140 délimite deux orifices internes 150, qui traversent chacun la bride 140 et qui sont chacun de révolution, centrés sur un axe d'orifice A150. Les axes d'orifice A150 sont parallèles entre eux et traversent le plan transversal P140, autrement dit le plan transversal P140 est aussi transversal aux axes d'orifices A150. Les directions « avant » ou « arrière » données en référence à l'axe longitudinal A140 sont ainsi équivalentes aux directions avant ou arrière données en référence aux axes d'orifice A150. La surface avant 142 est donc tournée vers l'avant selon une direction longitudinale parallèle aux axes d'orifice A150, tandis que la surface arrière 144 est tournée vers l'arrière selon une direction longitudinale parallèle aux axes d'orifice A150. Dans l'exemple illustré, les axes d'orifice A150 sont parallèles à l'axe longitudinal A140, c'est-à-dire orthogonaux au plan transversal P140.

Chaque orifice interne 150 débouche sur la surface arrière 144 de la bride 140 par une embouchure arrière 152. Avantageusement, chaque embouchure arrière 152 diverge, vers l'arrière, de l'axe d'orifice A150 de l'orifice interne 150 correspondant, chaque embouchure arrière 152 présentant ici une forme tronconique. En configuration montée de l'ensemble de connexion 100, chaque embouchure arrière 152 est agencée en regard d'une sortie de conduit 114A ou 114B respective parallèlement à l'axe longitudinal A140. Autrement dit, chaque embouchure arrière 152 est en communication fluidique avec la sortie de conduit 114A ou 114B correspondante. Plus généralement, chaque orifice interne 150 est en communication fluidique avec une sortie de conduit 114A ou 114B respective vers l'arrière, et avec une ouverture 130 vers l'avant.

Dans le premier mode de réalisation de l'invention, la bride 140 est réalisée en plusieurs parties assemblées les unes aux autres. La bride 140 comprend ici un corps avant 160, et deux corps arrière 162, chaque corps arrière coopérant avec le corps avant 160 par emboitement pour former un orifice interne 150 respectif. Chaque corps arrière 162 est ici logé dans une cavité cylindrique V140 respective ménagée dans le corps avant 160 de la bride 140. Le corps avant 160 et les corps arrière 162 sont ainsi simples à produire, par exemple par usinage.

Le corps avant 160 comporte la surface avant 142 de la bride 140, tandis que chaque corps arrière 162 comporte une portion de la surface arrière 144 de la bride 140.

Le corps avant 160 délimite un premier volume V160 de chaque orifice interne 150, qui débouche sur la surface avant 142. Chaque premier volume V160 présente une forme cylindrique de section circulaire, avec un diamètre D1, et est délimité par une première surface radiale interne S160, de diamètre D1, centrée sur l'axe d'orifice A150 correspondant et présentant une longueur L1, mesurée parallèlement à l'axe d'orifice A150.

Pour chaque orifice interne 150, le corps arrière 162 correspondant comprend une première surface axiale interne 163, qui est tournée vers l'avant, qui est perpendiculaire à l'axe d'orifice 150 et qui délimite longitudinalement un deuxième volume V162 de l'orifice interne 150, dans lequel débouche, vers l'arrière, le premier volume V160. Le deuxième volume V162 est délimité longitudinalement vers l'avant par une deuxième surface axiale interne 163' qui est ménagée sur le corps avant 160, perpendiculaire à l'axe d'orifice 150 et tournée vers l'arrière.

Vers l'arrière, chaque deuxième volume V162 débouche dans une embouchure arrière 152. Chaque deuxième volume V162 présente une forme cylindrique de section circulaire, avec un diamètre D2, et est délimité par une deuxième surface radiale interne S162, de diamètre D2, centrée sur l'axe d'orifice A150 correspondant et présentant une longueur L2, mesurée parallèlement à l'axe d'orifice A150. La longueur L2 correspond également à la longueur prise parallèlement à l'axe d'orifice A150 entre la première surface axiale interne 163 et la deuxième surface axiale interne 163'. Le diamètre D2 du deuxième volume V162 est supérieur au diamètre D1 du premier volume V160.

Sur chaque corps arrière 162, la surface arrière 144 comprend une gorge arrière 164, ménagée en creux dans la surface arrière 144 et présentant un contour circulaire fermé centré sur l'axe d'orifice A150 correspondant. Chaque gorge arrière 164 loge un premier joint d'étanchéité 166, ici un joint torique. Sur les figures les premiers joints d'étanchéité 166 sont représentés comprimés contre la bride 140 et le support 110. Chaque premier joint d'étanchéité 166 présente un diamètre moyen D166.

De préférence, le diamètre moyen D166 est égal, à ± 20%, au diamètre D2 de la deuxième surface radiale interne S162 correspondante, ce qui permet une construction d'ensemble de connexion 100 plus compacte.

En configuration montée de l'ensemble de connexion 100, quelle que soit la position radiale de la bride 140 par rapport au couvercle 120 et au support 110, chaque premier joint d'étanchéité 166 est interposé longitudinalement entre la bride 140 et le support 110 et entoure, de manière étanche, l'embouchure arrière 152 de l'orifice interne 150 correspondant et la sortie de conduit 114A ou 114B correspondante. Autrement dit, chaque premier joint d'étanchéité 166 isole le conduit interne 150 et le conduit du support 110 associé du logement de réception V120. Chaque embouchure arrière 152 est donc en permanence en communication fluidique avec la sortie de conduit 114A ou 114B correspondante.

On définit une distance minimale Δ1 entre les deux premiers joints d'étanchéité 166 comme étant la plus petite longueur, mesurée parallèlement au plan transversal P140, entre les deux gorges arrière 164.

Sur les figures 1 et 3, la bride 140 est représentée dans une position dite « neutre », dans laquelle la bride 140 est centrée dans le logement de réception V120. La bride 140 et le volume de réception V120 sont conçus de manière qu'en position neutre de la bride 140, le jeu entre la surface périphérique externe 146 et la jupe 124 est sensiblement uniforme tout autour de la bride 140. Sur le haut de la figure 1, on définit un premier jeu minimal J1 entre la surface périphérique externe 146 et la jupe 124 en regard, tandis que sur le bas de la figure 1, sur le haut de la figure 1, on définit un deuxième jeu minimal J2 entre la surface périphérique externe 146 et la jupe 124 en regard. Les jeux J1 et J2 sont pris parallèlement au plan transversal P140. La somme des premier et deuxième jeux J1+J2 représente un débattement maximal de la bride 140 dans le logement de réception V120 par rapport au couvercle 120 dans une direction parallèle au plan transversal P140.

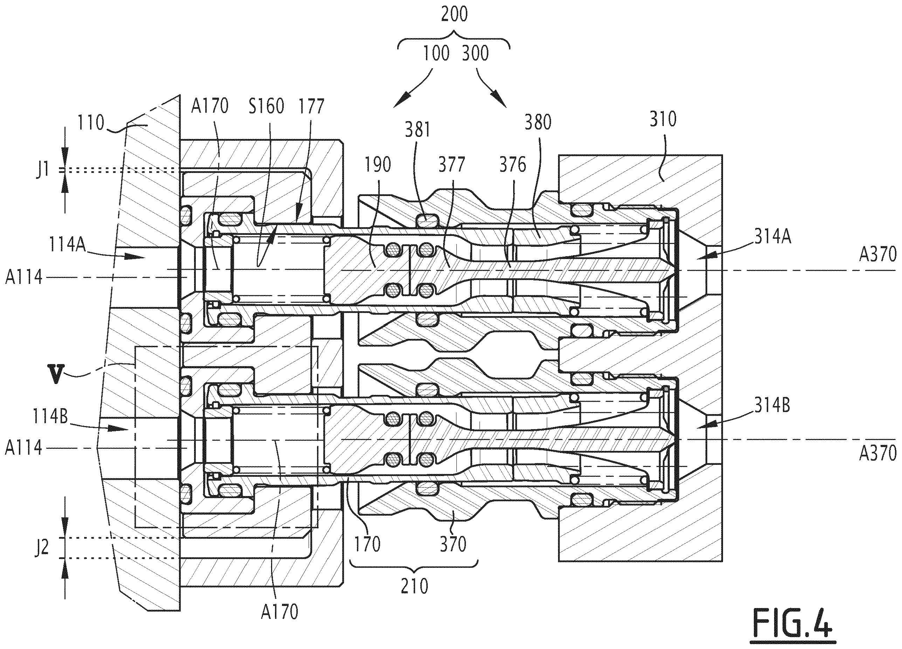

Sur les figures 1 et 3, la bride 140 est en position neutre et les premier et deuxième jeux J1 et J2 sont égaux. Sur la figure 4, la bride 140 est décalée par rapport à sa position neutre, et les premier et deuxième jeux J1 et J2 ne sont pas égaux.

Avantageusement, la distance minimale Δ1 entre les deux premiers joints d'étanchéité 166 adjacents est supérieure à la somme des premier et deuxième jeux J1+J2, autrement dit supérieure au débattement maximum de la bride 140 par rapport au couvercle 120 dans une direction parallèle au plan transversal P140. On évite ainsi le recouvrement des surfaces balayées par les premiers joints d'étanchéité 166 au cours des mouvements de la bride 140 par rapport au support 110, ce qui empêche la pollution des surfaces par les fluides des sorties de conduit 114A et 114B. Il est ainsi possible de faire circuler des fluides différents dans chacune des sorties de conduit 114A ou 114B.

L'ensemble de connexion 100 comprend aussi deux éléments de raccord fluidique 170. Chaque élément de raccord fluidique 170 comprenant un corps mâle 172, qui présente ici une forme de révolution creuse autour d'un axe central, dit axe de corps mâle A170. Le corps mâle 172 est traversé de part en part par un conduit interne 174 centré sur l'axe de corps mâle A170.

Chaque corps mâle 172 comprend une partie avant tubulaire 176 avec une surface radiale externe 177, centrée sur l'axe de corps mâle A170, et une partie arrière 178, agencée à l'opposé de la partie avant tubulaire 176 selon l'axe de corps mâle A170.

En configuration montée de l'ensemble de connexion 100, chaque orifice interne 150 accueille un élément de raccord fluidique 170 respectif. Chaque partie arrière 178 est reçue dans un orifice interne 150 respectif, tandis que chaque partie avant tubulaire 176 est reçue partiellement dans l'orifice interne 150 et dépasse sur l'avant de la bride 140 et au-delà de la surface avant 126 du couvercle 120, hors de l'orifice interne 150 et du logement de réception V120, à travers une ouverture 130 respective du couvercle 120. Ainsi le couvercle 120 comprend au moins autant d'ouvertures 130 que l'ensemble de connexion comprend de parties avant tubulaires 176. Plus précisément, la partie arrière 178 est reçue dans un deuxième volume V162 respectif, le conduit interne 174 de chaque corps mâle 172 étant ainsi en permanence en communication fluidique avec l'embouchure arrière 152 de l'orifice interne 150 correspondant, tandis que chaque partie avant tubulaire 176 traverse le premier volume V160 et dépasse sur l'avant de la bride 140, chaque partie avant tubulaire 176 étant configurée pour être accouplée avec un élément de raccord fluidique complémentaire, décrit plus loin.

Chaque corps mâle 172 est configuré pour venir en butée, sur l'avant, contre la bride 140. À cet effet, la partie arrière 178 de chaque corps mâle 172 comprend une collerette externe 180, qui fait saillie par rapport à la partie avant tubulaire 176 correspondante dans une direction radiale à l'axe de corps mâle A170 du corps mâle 172 correspondant. Chaque collerette externe 180 est logée dans un deuxième volume V162 correspondant. Chaque collerette externe 180 comprend une surface avant 182 et une surface arrière 184 opposée de la surface avant 182.

En configuration montée de l'ensemble de connexion, pour chaque collerette externe 180, la surface avant 182 est agencée en regard, dans la direction longitudinale avant, du corps avant 160. La surface arrière 184 de la collerette externe 180 est agencée en regard, dans la direction longitudinale arrière, du corps arrière 162. En d'autres termes, le corps mâle 172 est retenu dans la bride 140 dans la direction longitudinale avant. Plus précisément, pour chaque corps mâle 172, la première surface axiale interne 163 correspondante de la bride 140 est en regard vers l'avant de la surface arrière 184 de ce corps mâle 172. Autrement dit, chaque collerette externe 180 est montée selon l'axe d'orifice 150 correspondant entre le corps avant 160 et un corps arrière 162 respectif de la bride 140. En configuration montée de l'ensemble de connexion, en configuration désaccouplée, chaque corps mâle 172 a une possibilité de mouvement dans l'orifice interne 150 respectif de la bride selon l'axe d'orifice A150 correspondant. En effet, la longueur L2 du volume V162 est supérieure à une longueur L3 prise parallèlement à l'axe d'orifice A150 entre la surface avant 182 et la surface arrière 184 du corps mâle 172. En configuration désaccouplée, un ressort 196 de l'élément de raccord fluidique 170 repousse la surface avant 182 en appui surfacique contre la deuxième surface axiale interne 163', tandis qu'un jeu longitudinal existe entre la surface arrière 184 du corps mâle 172 et la première surface axiale interne 163 tout autour de l'axe d'orifice A150. La surface arrière 184 est apte à venir en appui contre la première surface axiale interne 163 vers l'arrière.

Une gorge périphérique externe 186 est ménagée en creux dans une surface radiale externe 187 de chaque collerette externe 180, chaque gorge périphérique externe 186 étant centrée sur l'axe de corps mâle A170 et étant configurée pour recevoir un deuxième joint d'étanchéité 188, ici un joint torique. Pour chaque collerette externe 180, la surface radiale externe 187 est située en regard radial d'une deuxième surface radiale interne S162 correspondante. En configuration montée de l'élément de raccord 170 dans la bride 140, un deuxième joint d'étanchéité 188 est interposé radialement à l'axe d'orifice A150, en compression et de manière étanche, entre chaque corps mâle 172 et la deuxième surface radiale interne S162 de la bride 140, précisément entre chaque collerette externe 180 et la deuxième surface radiale interne S162.

Chaque corps mâle 172 est reçu avec du jeu d'assemblage dans l'orifice interne 150 correspondant, de manière que ce corps mâle 172 a une possibilité d'inclinaison par rapport à l'axe d'orifice A150 correspondant. Cette possibilité d'inclinaison correspond à un mouvement du corps mâle 172 dans l'orifice interne 150, avec une déformation élastique du deuxième joint d'étanchéité 188.

En configuration désaccouplée de l'ensemble de connexion 100, le corps mâle 172 est dans une position dite « neutre » dans l'orifice interne 150 correspondant. Dans cette position neutre, l'axe de corps mâle A170 correspondant est sensiblement aligné avec l'axe d'orifice A150 correspondant et un angle de bascule α de l'axe du corps mâle A170 par rapport à l'axe d'orifice A150 est nul.

Lorsque l'angle de bascule α est non nul, le deuxième joint d'étanchéité 188 est localement plus compressé qu'en position neutre du corps mâle 172, et le retour élastique du deuxième joint d'étanchéité 188 tend à faire revenir le corps mâle 172 vers sa position neutre. On comprend que l'amplitude maximale de l'angle de bascule α dépend de la géométrie des pièces et des jeux d'assemblage qui sont présents lorsque l'ensemble de connexion 100 est en configuration désaccouplée. Par exemple, l'amplitude maximale de l'angle de bascule α dépend des jeux radiaux entre la surface radiale externe 177 de la partie avant tubulaire 176 et la première surface radiale interne S160 de la bride 140 en regard radialement à l'axe longitudinal A140, et/ou dépend des jeux radiaux entre la surface radiale externe 187 de la collerette externe 180 et la deuxième surface radiale interne S162 de la bride 140 radialement en regard et/ou dépend des jeux longitudinaux entre la collerette externe 180 et la bride 140. Les jeux radiaux et longitudinaux entre corps mâle 172 et bride 140 sont présents tout autour du corps mâle 172 en position neutre pour permettre une adaptation de la position du corps mâle 172 dans toutes directions autour de l'axe d'orifice A150.

En pratique, en configuration inclinée par rapport à sa position neutre, l'axe de corps A170 est sécant avec l'axe d'orifice A150 correspondant au niveau du joint d'étanchéité 188 associé le long de l'axe d'orifice A150.

De préférence, la longueur L1 de la première surface radiale interne S160 est supérieure à la longueur L2 de la deuxième surface radiale interne S162, pour limiter l'amplitude maximale de l'angle de bascule α, de préférence supérieure de 10% à la longueur L2 de la deuxième surface radiale interne S162. En pratique mais de manière non obligatoire, l'amplitude maximale de l'angle de bascule α est inférieure à 1° - 1 degré -.

Chaque élément de raccord fluidique 170 comprend en outre une soupape 190, qui est reçue dans le conduit interne 174 et qui est mobile, par rapport au corps mâle 172, entre une position avancée de fermeture, dans laquelle la soupape 190 est en butée avant contre un épaulement interne 192 de la partie avant tubulaire 176 et obture le conduit interne 174 de manière étanche, et une position reculée d'ouverture, dans laquelle la soupape 190 n'empêche pas le passage fluidique dans le conduit interne 174. La soupape 190 est représentée en position avancée de fermeture sur les figures 1 et 3 et en position reculée d'ouverture sur la figure 4.

Chaque élément de raccord fluidique 170 comprend aussi une bague d'interface 194, qui est reçue dans le conduit interne 174, et le ressort 196, qui est interposé entre la soupape 190 et la bague d'interface 194 pour repousser la soupape 190 vers sa position avancée de fermeture.

En configuration montée de l'élément de raccord fluidique 170 dans la bride 140, la bague d'interface 194 prend appui, sur l'arrière, contre la bride 140 et le ressort 196 prend appui sur la bague d'interface 194. Plus précisément, la bague d'interface 194 prend ici appui sur le corps arrière 162 de la bride 140. Lors du montage de l'élément de raccord 170 dans la bride 140, avant le montage du corps arrière 162 dans le corps avant 160, la bague d'interface 194 est retenue sur l'arrière par un segment d'arrêt 198, qui empêche la bague d'interface 194 de sortir du conduit interne 174 vers l'arrière.

Grâce au corps arrière 162 de la bride 140, les risques que la partie arrière 178 du corps mâle 172 ou que la bague d'interface 194 entrent en contact avec la face avant 112 du support 110 sont supprimés : on évite d'endommager la surface d'étanchéité sur laquelle glisse le premier joint d'étanchéité 166, ce qui réduit les risques de fuites.

Avantageusement, l'effort exercé par chaque ressort 196 sur le corps arrière 162 de la bride 140, par l'intermédiaire de la bague d'interface 194 correspondante, contribue à ramener l'élément de raccord 170 correspondant dans sa position neutre par rapport à l'orifice interne 150 correspondant, avec l'axe de corps mâle A170 confondu avec l'axe d'orifice A150 correspondant, en configuration désaccouplée.

La bague d'interface 194 présente un diamètre interne, qui est de préférence égal à un diamètre interne minimal de l'embouchure arrière 152 de l'orifice interne 150, de manière à ne pas gêner la circulation des fluides dans le conduit interne 174.

Un ensemble de thermorégulation 200 est représenté sur la figure 3. L'ensemble de thermorégulation 200 comprend l'ensemble de connexion 100, monté sur le support 110, et la plaque 300, qui comprend des éléments de raccord complémentaires 370, qui sont chacun configurés pour s'accoupler à un élément de raccord 170 respectif de l'ensemble de connexion 100. La plaque 300 comprend donc ici deux éléments de raccord complémentaires 370. Dans l'exemple illustré, l'ensemble de thermorégulation 200 est configuré pour la circulation d'un fluide de refroidissement, aussi l'ensemble de thermorégulation 200 est ici un ensemble de refroidissement, tandis que la plaque 300 est aussi appelée « plaque froide ».

En variante non représentée, l'ensemble de thermorégulation 200 est destiné à la circulation d'un fluide chaud, par exemple pour chauffer un moule d'injection monté sur la plaque 300.

De manière générale, on comprend que la mise en oeuvre de l'invention est indépendante de la température du fluide appelé à circuler au travers de l'ensemble de connexion 100 et de l'ensemble de thermorégulation 200.

Lors de la connexion de la plaque 300 à l'ensemble de connexion 100, la plaque 300 est présentée en regard de l'ensemble de connexion 100. Les directions avant et arrière relatives à la plaque 300 sont donc inversées par rapport à l'ensemble de connexion 100. Sur les figures 3 et 4, l'avant de la plaque 300 est situé sur la gauche des dessins.

La plaque 300 comprend un support 310, avec une face avant 312, orientée vers la face avant 112 du support 110 lors de la connexion de la plaque 300 à l'ensemble de connexion 100. Le support 310 comprend ici deux logements taraudés V310, de forme cylindrique centrée selon un axe orthogonal à la face avant 312 du support 310. Le support 310 comprend un conduit, qui est ménagé dans le support 310 et qui débouche d'un fond de chaque logement taraudé V310 par deux sorties de conduit 314A et 314B respectives. Chaque sortie de conduit 314A ou 314B présente ici une portion tronconique évasée en direction de la face avant 312.

Les éléments de raccord fluidique 170 de l'ensemble de connexion 100 étant ici des éléments mâles avec un corps mâle 172, les éléments de raccord complémentaires 370 sont ici des éléments femelles. Chaque élément de raccord complémentaire 370 comprend un corps femelle 372, qui présente ici une forme de révolution creuse autour d'un axe de corps femelle A370 et qui est vissé dans un logement taraudé V310 respectif de manière étanche, avec ici interposition radiale d'un joint d'étanchéité 302.

Chaque corps femelle 372 délimite un conduit interne 374, qui communique fluidiquement avec une sortie de conduit 314A ou 314B respective du support 310. Chaque élément de raccord complémentaire 370 comprend aussi un poussoir 376, logé dans le conduit interne 374 correspondant, chaque poussoir 376 étant solidarisé en translation au corps femelle 372 correspondant par un segment d'arrêt 378, ici situé à une extrémité arrière du poussoir. Chaque poussoir 376 comprend, à une extrémité avant opposée à l'extrémité arrière, une partie avant 377 formant un renflement dans lequel est logé un joint d'étanchéité 379.

Chaque corps femelle 372 comprend aussi un tiroir 380 annulaire, qui est disposé radialement à l'axe de corps femelle A370, dans le conduit interne 374, entre le poussoir 376 et le corps femelle 372. Chaque tiroir 380 est mobile dans le conduit interne 374 entre une position avancée de fermeture du conduit interne 374, dans laquelle le tiroir 380 est en contact étanche avec, d'une part, le corps femelle 372 par l'intermédiaire d'un joint d'étanchéité 381 et, d'autre part, la partie avant 377 du poussoir 376, par l'intermédiaire du joint 379, obturant le conduit interne 374 de manière étanche, et une position rétractée d'ouverture du conduit interne 374, dans laquelle le tiroir 380 n'empêche pas la circulation fluidique dans le conduit interne 374.

Chaque corps femelle 372 comprend aussi un ressort 382, qui est interposé entre le tiroir 380 et le poussoir 376 correspondants, chaque ressort 382 repoussant le tiroir 380 vers sa position avancée de fermeture. Le tiroir 380 et la partie avant 377 du poussoir 376 présentent chacun une face avant, qui est située dans un même plan avant P380 lorsque le tiroir 380 est en position avancée de fermeture. Chaque corps femelle 372 comprend une embouchure évasée, ici une embouchure conique 384, qui est disposée en avant du plan avant P380.

On décrit à présent une séquence d'accouplement de la plaque 300 à l'ensemble de connexion 100.

La plaque 300 est rapprochée de l'ensemble de connexion 100, parallèlement à l'axe longitudinal A140, chaque embouchure conique 384 étant placée en regard, parallèlement à l'axe longitudinal A140, d'une partie avant tubulaire 176 respective. Chaque élément de raccord 170 forme, avec l'élément de raccord complémentaire 370 correspondant, un couple d'éléments de raccord fluidique 210. L'ensemble de thermorégulation 200 comprend donc deux couples d'éléments de raccord 210. Initialement, tel que représenté sur les figures 1 et 3, la bride 140 est dans sa position neutre, ce qui n'est pas forcément le cas au début de chaque accouplement, et chaque élément de raccord 170 est dans sa position neutre.

Idéalement, l'axe de corps femelle A370 est aligné avec un axe de corps mâle A170 correspondant. En pratique, il peut exister un défaut d'alignement Δ2, pris parallèlement au plan transversal P140, entre chaque axe de corps femelle A370 et chaque axe de corps mâle A170 correspondant. Le défaut d'alignement Δ2 au début de l'accouplement entre axes de corps mâle A170, s'ils étaient en position neutre, et axes de corps femelle A370 doit être inférieur ou égal à la moitié du débattement maximal J1+J2 de la bride 140 dans le logement de réception V120.

On définit un premier écartement D4 comme étant la distance minimale entre les axes de corps A170 des deux éléments de raccord 170 sur la bride 140, ainsi qu'un deuxième écartement D5 comme étant la distance minimale entre les axes de corps femelle A370 des éléments de raccord complémentaires 370 sur la plaque 300. Lorsque le premier écartement D4 est différent du deuxième écartement D5, l'ensemble de thermorégulation 200 présente un défaut d'écartement, égal à la valeur absolue de la différence entre le premier écartement D4 et le deuxième écartement D5, c'est-à-dire | D4 - D5 |.

En particulier, l'inclinaison du ou des éléments de raccord 170 dans la bride 140 selon un angle de bascule α permet de compenser un défaut d'écartement maximal, de l'ordre de 0,2 mm par exemple, le défaut d'écartement | D4 - D5 | devant être inférieur à ce défaut d'écartement maximal.

La partie avant tubulaire 176 de chaque élément de raccord 170 s'engage dans l'embouchure conique 384 d'un élément de raccord complémentaire 370. Avec la progression de chaque élément de raccord 170 dans l'embouchure conique 384, chaque corps mâle 172 s'incline si besoin, c'est-à-dire que l'angle de bascule α évolue et prend une valeur non nulle. La bride 140 se déplace également si besoin par rapport au couvercle 120, dans le plan transversal P140, pour compenser le défaut d'alignement Δ2 et permettre la prise en compte du défaut d'écartement | D4 - D5 | par l'inclinaison des éléments de raccord 170. Cette double adaptation du côté des éléments de raccord 170 permet que chaque corps mâle 172 vienne en contact avec le tiroir 280 et le repousse vers sa position reculée d'ouverture, alors que conjointement, chaque poussoir 376 repousse la soupape 190 vers sa position d'ouverture.

En configuration désaccouplée et en cours d'accouplement, un mouvement longitudinal vers l'arrière du corps mâle 172 dans la bride 140 est limité par la mise en butée longitudinale arrière de la surface arrière 184 avec la première surface axiale interne 163.

Lors du déplacement de la bride 140 par rapport au support 110 et au couvercle 120, les premiers joints d'étanchéité 166 sont en glissement étanche avec la face avant 112 du support 110, et les sections délimitées par les premiers joints d'étanchéité 166 qui se déplacent ne se recouvrent pas, même en cas de débattement maximum.

Chaque corps mâle 172 prend l'étanchéité avec le corps femelle 370 correspondant au niveau du joint 381.

Le rapprochement se poursuit jusqu'à ce que la plaque 300 atteigne une configuration accouplée, représentée sur la figure 4, avec une position longitudinale par rapport au support 110 dans laquelle la plaque 300 est maintenue, par des moyens non détaillés ici. L'ensemble de thermorégulation 200 est alors dans une configuration accouplée.

En pratique, en configuration accouplée, l'éventuel défaut d'écartement | D4 - D5 | est réparti entre les deux éléments de raccord 170, qui sont alors tous deux inclinés dans leurs orifices internes 150 par rapport à leur position neutre, de préférence mais de manière non obligatoire équitablement avec le même angle de bascule α.

En configuration accouplée, un fluide peut circuler à travers chaque couple d'éléments de raccord 210 et à travers la plaque froide 300 et le support 110. Le fluide transporté est de l'eau avec une pression de 5 à 20 bars par exemple. La pression du fluide en circulation repousse la partie arrière 178 du corps mâle 172 en contact avec la deuxième surface axiale interne 163'.

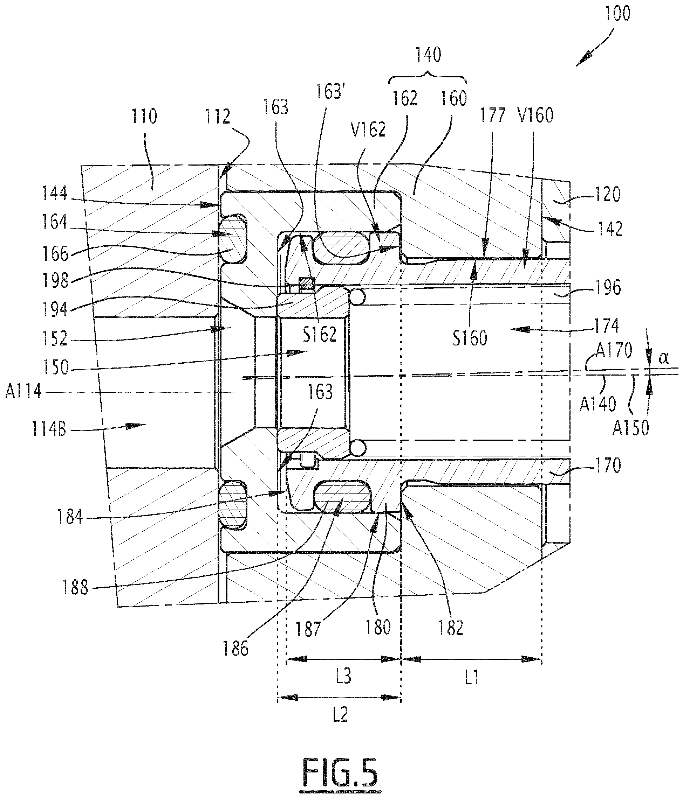

En configuration accouplée, si le corps mâle 172 a une configuration inclinée par rapport à l'axe d'orifice A150, la distance longitudinale entre la surface avant 182 de la collerette externe 180 et la deuxième surface axiale interne 163' n'est pas uniforme tout autour de l'axe d'orifice A150. Sur la figure 5, la surface avant 182 est en contact longitudinal de la bride 140 dans la partie inférieure de la figure tandis que la surface avant 182 est décollée de la deuxième surface axiale interne 163' dans la partie supérieure de la figure. En configuration accouplée, la distance longitudinale entre la surface arrière 184 de la collerette externe 180 et la première surface axiale interne 163 est non nulle mais pas uniforme tout autour de l'axe d'orifice A150.

À titre d'exemple d'utilisation, lorsque les deux sorties de conduit 314A et 314B de la plaque 300 sont reliées au même conduit interne ménagé dans la plaque 300, on crée un circuit de refroidissement. Dans ce cas, les sens d'écoulement dans les conduits internes 174 des deux éléments de raccord 170 de l'ensemble de connexion 100 sont opposés.

On décrit à présent une séquence de désaccouplement de l'ensemble de thermorégulation 200.

En partant de la configuration accouplée de l'ensemble de thermorégulation 200, la plaque 300 est éloignée du support 110. Les soupapes 190 et tiroirs 380, poussés par les ressorts 196 et 382 respectifs, reviennent chacun dans leur position de fermeture respective. Les corps mâles 172 se dégagent des corps femelles 372.

Si, en configuration accouplée de l'ensemble de connexion 100, les corps mâles 172 avaient pris une position inclinée par rapport à leur position neutre, une fois l'ensemble de connexion 100 en configuration désaccouplée les corps mâles 172 ont été ramenés en position neutre sous l'action des deuxièmes joints 188. La bride 140 conserve la position de débattement prise lors de l'accouplement.

Le retour élastique des corps mâles 172 en position neutre permet de réduire la dimension des embouchures coniques 384 radialement à son axe longitudinal A370.

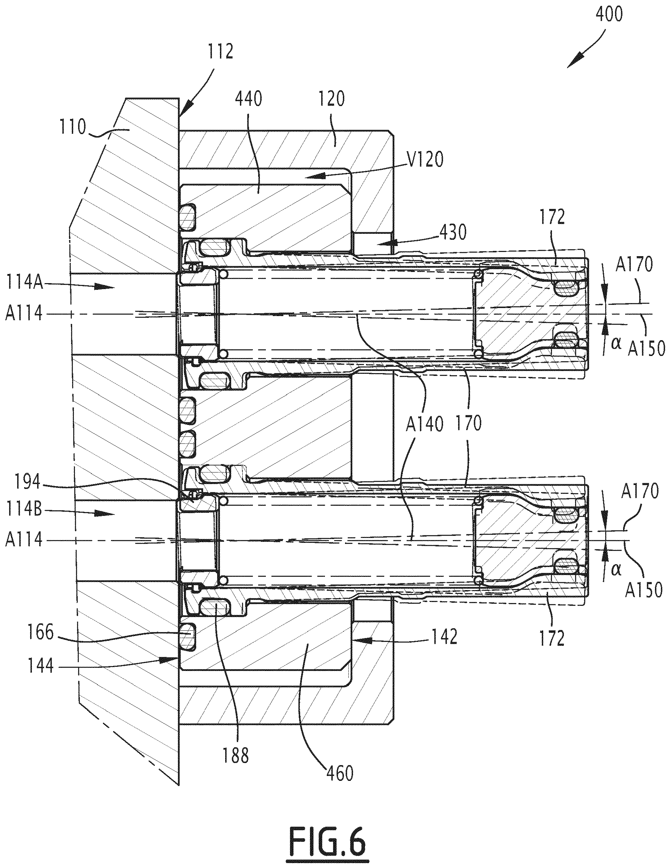

Un ensemble de connexion 400 conforme à un deuxième mode de réalisation de l'invention est représenté en figure 6. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

Une des principales différences du deuxième mode de réalisation avec le premier mode est que dans le deuxième mode de réalisation, l'ensemble de connexion 400 comprend une bride 440 qui est réalisée en un seul corps 460. Chaque premier joint d'étanchéité 166 est logé directement dans la surface arrière 144 de la bride 440.

D'autre part, le couvercle 120 ne comprend qu'une seule ouverture 430, par laquelle débouche chaque partie avant tubulaire 176 hors de l'ensemble de connexion 400.

Les mouvements d'inclinaison des éléments de raccord fluidique 170 dans la bride 440 sont représentés de manière schématique par le profil, en trait fin, des éléments de raccord fluidique 170 basculés de part et d'autre de leur position neutre. Cette position neutre peut être légèrement désalignée avec l'axe d'orifice A150 correspondant lorsque l'élasticité du joint d'étanchéité 188 et/ou le ressort de soupape 196 ne parviennent pas à contrer complètement les efforts de gravité de l'élément de raccord fluidique 170. La possibilité d'inclinaison des corps mâles 172 est obtenue par variation de l'angle de bascule α correspondant.

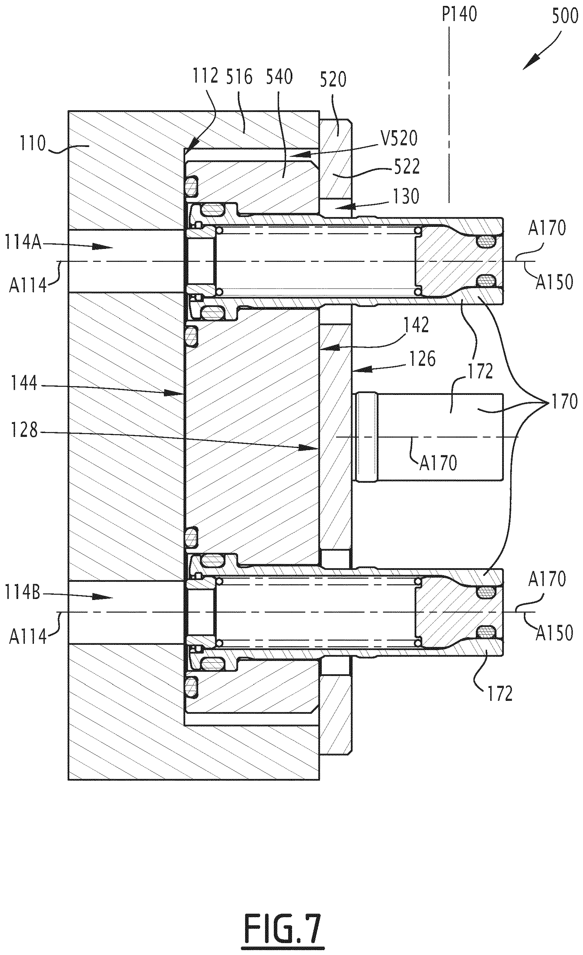

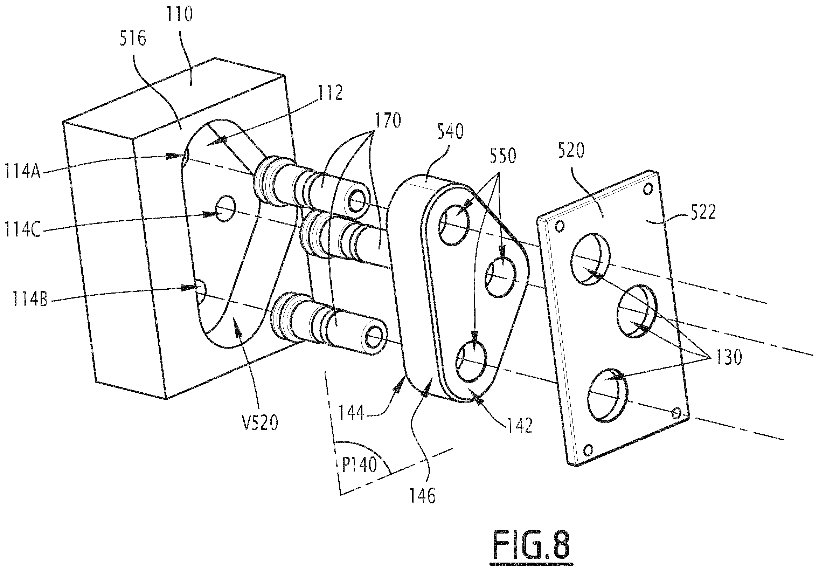

Un ensemble de connexion 500 conforme à un troisième mode de réalisation de l'invention est représenté aux figures 7 et 8. On décrit principalement les différences du troisième mode avec les modes précédents. L'ensemble de connexion 500 comprend une bride 540, réalisée en un seul corps et dans laquelle sont ménagés trois orifices internes 550, recevant chacun un corps mâle 172. Les trois orifices internes 550 sont ici agencés en triangle, et la bride 540 présente une section transversale globalement triangulaire dans le plan transversal P140.

L'ensemble de connexion 500 est monté sur le support 110, dans lequel est ménagé un conduit débouchant ici par trois sorties de conduit 114A, 114B et 114C. Les trois sorties de conduit 114A, 114B et 114C sont chacune agencées en regard d'un orifice interne 550 respectif dans la direction longitudinale avant, et sont donc ici agencées en triangle. Les trois sorties de conduit 114A, 114B et 114C débouchent sur la face avant 112 du support 110. Le support 110 comprend aussi une jupe 516, ménagée en saillie par rapport à la face avant 112 et qui entoure les trois sorties de conduit 114A, 114B et 114C. L'ensemble de connexion 500 comprend un couvercle 520, qui est ici réduit à une paroi avant 522, le couvercle 520 étant fixé au support 110 dans une configuration montée de l'ensemble de connexion 500, dans laquelle le couvercle 520 ménage avec le support 110 un logement de réception V520 de la bride 540. Les sorties de conduit 114A, 114B et 114C débouchent dans le logement de réception V520, chaque sortie de conduit 114A, 114B et 114C étant associée à un orifice interne 550 respectif de la bride 540.

Comme dans les modes de réalisation précédents, chaque corps mâle 172 est monté dans l'orifice interne 550 correspondant avec possibilité d'inclinaison par rapport à l'axe d'orifice A150 correspondant. Sur la figure 7, chaque corps mâle 172 est représenté en position neutre. L'angle de bascule α étant nul, il n'est pas référencé sur la figure 7.

Dans le troisième mode de réalisation, les trois orifices internes 550 sont agencés en triangle et la bride 540 présente dans le plan transversal P140 une section sensiblement triangulaire.

En variante non illustrée, les trois orifices internes sont alignés, et la bride présente alors par exemple une section transversale oblongue.

Plus généralement, on comprend que quel que soit le nombre d'orifice internes de la bride, leur agencement et la forme de la bride peuvent être adaptés, lors de la conception, selon les applications envisagées.

Dans le premier mode de réalisation, la bride comprend un corps avant et plusieurs corps arrière, chaque corps arrière étant associé à un orifice interne respectif.

En variante non représentée, les corps arrières font partie d'un même élément arrière, qui est réalisé d'une seule pièce et qui coopère avec le corps avant pour ménager les orifices internes dans lesquels sont reçus les corps mâles. L'élément arrière délimite alors l'embouchure arrière de chacun des orifices interne, ainsi que la surface arrière de la bride.

Dans les modes de réalisation illustrés, les axes d'orifices A150 sont parallèles à l'axe longitudinal A140 de la bride 140, 440 ou 540.

En variante non représentée, les axes d'orifices A150 sont inclinés de quelques degrés par rapport à l'axe longitudinal A140, les axes d'orifice A150 restant parallèles entre eux. Par exemple, les axes d'orifice A150 sont inclinés d'un angle compris entre ±20° par rapport à l'axe longitudinal A140. Autrement dit les axes d'orifice A150 forment avec le plan transversal P140 un angle compris entre 70° et 110°. Dans tous les cas, les axes d'orifice A150 traversent le plan transversal P140.

En variante non représentée, le joint d'étanchéité interposé radialement entre le corps mâle 172 et la bride 140, 440, 540 est logé dans une gorge périphérique interne ménagée sur la bride et en regard dans la direction radiale à l'axe longitudinal A140 avec la surface radiale externe 187 de la collerette externe 180. La gorge périphérique interne est ménagée par exemple dans la deuxième surface radiale interne S162 correspondante.

Les modes de réalisation et les variantes mentionnées ci-dessus peuvent être combinés entre eux pour générer de nouveaux modes de réalisation de l'invention.

## Revendications

1. Ensemble de connexion (100 ; 400 ; 500), configuré pour être accouplé à une plaque (300) et comprenant :
- une bride (140 ; 440 ; 540), traversée par au moins deux orifices internes (150 ; 550), qui sont chacun centrés sur un axe d'orifice (A150), les axes d'orifice étant parallèles entre eux, la bride comprenant une surface avant (142) tournée vers l'avant selon une direction longitudinale parallèle aux axes d'orifice (A150) et une surface arrière (144) tournée vers l'arrière, les surfaces avant et arrière étant parallèles à un plan transversal (P140), qui est transversal aux axes d'orifice (A150),
- un couvercle (120 ; 520), configuré pour être fixé à un support (110) dans une configuration montée de l'ensemble de connexion, le support comprenant des sorties de conduit (114A, 114B ; 114C), chaque sortie de conduit étant associée à un orifice interne (150 ; 550) respectif,
dans lequel :
- en configuration montée de l'ensemble de connexion, la surface arrière (144) de la bride est située en regard d'une face avant (112) du support (110) dans la direction longitudinale, tandis que la surface avant (142) de la bride est située en regard d'une surface arrière (128) du couvercle dans la direction longitudinale,
- chaque orifice interne (150 ; 550) comprend une embouchure arrière (152), qui débouche sur la surface arrière (144) de la bride et qui est en communication fluidique avec la sortie de conduit (114A, 114B ; 114C) correspondante,
- l'ensemble de connexion comprend en outre :
• des premiers joints d'étanchéité (166), qui, en configuration montée de l'ensemble de connexion, sont interposés entre la surface arrière (144) de la bride et la face avant (112) du support en regard, chaque premier joint d'étanchéité entourant une sortie de conduit (114A, 114B ; 114C) respective et l'embouchure arrière (152) associée,
• au moins deux éléments de raccord fluidique (170), chaque élément de raccord fluidique comprenant un corps mâle (172) traversé par un conduit interne (174), chaque corps mâle comprenant une partie avant tubulaire (176) et une partie arrière (178),
- chaque partie arrière (178) est reçue dans un orifice interne (150 ; 550) respectif de la bride, tandis que chaque partie avant tubulaire (176) dépasse sur l'avant de la bride à travers une ouverture (130 ; 430) du couvercle, chaque corps mâle (172) étant configuré pour venir en butée sur l'avant contre la bride,
- chaque partie avant tubulaire (176) est configurée pour être accouplée avec un élément de raccord fluidique complémentaire (370) appartenant à la plaque (300),
- le conduit interne (174) de chaque corps mâle est en permanence en communication fluidique avec l'embouchure arrière (152) de l'orifice interne (150 ; 550) correspondant,
**caractérisé en ce que** :
- en configuration montée de l'ensemble de connexion (100 ; 400 ; 500), la bride (140 ; 440 ; 540) est déplaçable par rapport au couvercle (120 ; 520) uniquement selon un mouvement porté par le plan transversal (P140),
- pour chaque corps mâle (172), l'ensemble de connexion comprend un deuxième joint d'étanchéité (188), qui est interposé radialement entre chaque corps mâle et une surface radiale interne (S162) de l'orifice interne (150 ; 550) correspondant,
- chaque corps mâle (172) est monté dans l'orifice interne (150 ; 550) correspondant avec possibilité d'inclinaison par rapport à l'axe d'orifice (A150) correspondant.

2. Ensemble de connexion (100; 400 ; 500) selon la revendication 1, **caractérisé en ce que**, en configuration désaccouplée, chaque corps mâle (172) a une possibilité de mouvement dans l'orifice interne (150 ; 550) respectif de la bride selon l'axe d'orifice (A150) correspondant.

3. Ensemble de connexion (100) selon l'une quelconque des revendications 1 ou 2, **caractérisé en ce que**, pour chaque corps mâle (172), une surface axiale interne (163) de la bride (140) qui délimite l'orifice interne (150) correspondant est en regard vers l'avant d'une surface arrière (184) du corps mâle (172).

4. Ensemble de connexion (100 ; 400 ; 500) selon l'une quelconque des revendications 1 à 3, **caractérisé en ce que** la partie arrière (178) de chaque corps mâle (172) comprend une collerette externe (180), ménagée en saillie par rapport à la partie avant tubulaire (176) dans une direction radiale à un axe central (A170) du corps mâle correspondant, et **en ce que** chaque deuxième joint d'étanchéité (188) est interposé radialement entre la bride (140 ; 440 ; 540) et la collerette externe correspondante.

5. Ensemble de connexion (100) selon la revendication 4, **caractérisé en ce que** la bride (140) comprend au moins un corps arrière (162) et un corps avant (160), qui sont logés l'un dans l'autre, le corps arrière (162) délimitant l'embouchure arrière (152) de l'orifice interne (150), le corps avant (160) délimitant la surface avant (142) de la bride, la collerette externe (180) du corps mâle (172) étant montée selon l'axe d'orifice (A150) entre le corps avant (160) et le corps arrière (162).

6. Ensemble de connexion (100) selon la revendication 5, **caractérisé en ce que** chaque premier joint d'étanchéité (166) est interposé longitudinalement entre une surface du corps arrière (162) délimitant la surface arrière (144) de la bride (140) et le support (110), chaque premier joint d'étanchéité (166) étant de préférence logé dans une gorge (164) respective ménagée dans le corps arrière (162).

7. Ensemble de connexion (100) selon l'une quelconque des revendications 5 ou 6, **caractérisé en ce que** chaque deuxième joint d'étanchéité (188) est interposé radialement entre une surface radiale interne (S162) de l'orifice interne (150) formée sur le corps arrière (162) de la bride (140) et la collerette externe, chaque deuxième joint (188) étant de préférence logé dans une gorge périphérique externe (186) respective de la collerette externe (180).

8. Ensemble de connexion (100) selon l'une quelconque des revendications 5 à 7, **caractérisé en ce que** la bride (140) comprend au moins un corps arrière (162) par élément de raccord fluidique (170), chaque corps arrière étant logé dans une cavité cylindrique (V140) respective ménagée dans le corps avant (160) de la bride (140).

9. Ensemble de connexion (100 ; 400 ; 500) selon l'une quelconque des revendications 4 à 8, **caractérisé**
- **en ce que** l'orifice interne (150 ; 550) comprend un premier volume (V160) délimité par une première surface radiale interne (S160) de la bride (140 ; 440 ; 540), logeant partiellement la partie avant tubulaire (176) et débouchant vers l'avant sur la surface avant (142) de la bride et vers l'arrière sur un deuxième volume (V162) de l'orifice interne, le deuxième volume étant délimité par une deuxième surface radiale interne (S162) de la bride et logeant la collerette externe (180), et
- **en ce qu'**une longueur (L1) de la première surface radiale interne (S160) est supérieure à une longueur (L2) de la deuxième surface radiale interne (S162).

10. Ensemble de connexion (100) selon l'une quelconque des revendications 1 à 9, **caractérisé en ce que** chaque élément de raccord fluidique (170) comprend :
- une soupape (190) mobile dans le conduit interne (174) par rapport au corps mâle (172),
- un ressort (196), logé dans le conduit interne et qui repousse la soupape dans une position de fermeture du conduit interne, dans laquelle la soupape est en contact étanche avec la partie avant tubulaire (176) et obture le conduit interne, et
- une bague d'interface (194), reçue dans le conduit interne,
et **en ce que**, en configuration montée de l'ensemble de connexion (100 ; 400 ; 500), le ressort est en appui arrière sur la bague d'interface, elle-même en appui arrière contre la bride (140).

11. Ensemble de connexion (100) selon l'une quelconque des revendications 1 à 10, **caractérisé en ce que** l'embouchure arrière (152) diverge de l'axe d'orifice (A150) de l'orifice interne (150) correspondant vers l'arrière.

12. Ensemble de connexion (100) selon l'une quelconque des revendications 1 à 11, **caractérisé en ce que**, en configuration montée de l'ensemble de connexion, une distance minimale (Δ1) entre deux premiers joints d'étanchéité (166) adjacents est supérieure à un débattement maximum (J1+J2) de la bride (140) par rapport au couvercle (120) dans une direction parallèle au plan transversal (P140).

13. Ensemble de connexion (100 ; 400 ; 500) selon l'une quelconque des revendications 1 à 12, **caractérisé en ce que**, en configuration désaccouplée, chaque deuxième joint d'étanchéité (188) rappelle le corps mâle (172) correspondant dans une position dans laquelle un axe central (A170) du corps mâle (172) est sensiblement aligné avec l'axe d'orifice (A150) correspondant.

14. Ensemble de connexion (100 ; 400) selon l'une quelconque des revendications 1 à 13, **caractérisé en ce que** le couvercle (120) comprend :
- une jupe (124) qui délimite un logement de réception (V120) de la bride (140 ; 440) radialement à la direction longitudinale, et
- une paroi avant (122), qui comprend au moins autant d'ouvertures (130 ; 430) que l'ensemble de connexion comprend de parties avant tubulaires (176).

15. Ensemble de thermorégulation (200), notamment de refroidissement, comprenant :
- un support (110), dans lequel sont ménagées aux moins deux sorties de conduit (114A, 114B ; 114C),
- un ensemble de connexion (100 ; 400 ; 500) selon l'une quelconque des revendications 1 à 14, le couvercle (120 ; 520) étant fixé au support en configuration montée de l'ensemble de connexion (100 ; 400 ; 500), et
- une plaque (300), sur laquelle sont fixés au moins deux éléments de raccord complémentaires (370), chacun configuré pour s'accoupler avec un élément de raccord fluidique (170) respectif de l'ensemble de connexion.

## Patentansprüche

1. Verbindungsanordnung (100; 400; 500), die konfiguriert ist, um mit einer Platte (300) gekoppelt zu werden, und umfassend:
- einen Flansch (140; 440; 540), der von mindestens zwei inneren Öffnungen (150; 550) durchquert wird, die jeweils auf einer Öffnungsachse (A150) zentriert sind, wobei die Öffnungsachsen parallel zueinander sind, der Flansch umfassend eine vordere Fläche (142), die in einer Längsrichtung parallel zu den Öffnungsachsen (A150) nach vorne gerichtet ist, und eine hintere Fläche (144), die nach hinten gerichtet ist, wobei die vordere und die hintere Fläche parallel zu einer Querebene (P140) sind, die quer zu den Öffnungsachsen (A150) ist,
- einen Deckel (120; 520), der konfiguriert ist, um in einer montierten Konfiguration der Verbindungsanordnung an einem Träger (110) befestigt zu sein, der Träger umfassend Leitungsausgänge (114A, 114B; 114C),wobei jeder Leitungsausgang mit einer jeweiligen inneren Öffnung (150; 550) assoziiert ist,
wobei:
- sich die hintere Fläche (144) des Flanschs in einer montierten Konfiguration der Verbindungsanordnung gegenüber einer Vorderseite (112) des Trägers (110) in der Längsrichtung befindet, während sich die vordere Fläche (142) des Flanschs gegenüber einer hinteren Fläche (128) des Deckels in der Längsrichtung befindet,
- jede innere Öffnung (150; 550) eine hintere Mündung (152) umfasst, die sich an der hinteren Fläche (144) des Flanschs öffnet und die in Fluidverbindung mit dem entsprechenden Leitungsausgang (114A, 114B; 114C) ist,
- die Verbindungsanordnung ferner Folgendes umfasst:
• erste Dichtungen (166), die in einer montierten Konfiguration der Verbindungsanordnung zwischen der hinteren Fläche (144) des Flanschs und der Vorderseite (112) des gegenüberliegenden Trägers eingefügt sind, wobei jede erste Dichtung einen jeweiligen Leitungsausgang (114A, 1148; 114C) und die assoziierte hintere Mündung (152) umgibt,
• mindestens zwei Fluidverbindungselemente (170), wobei jedes Fluidverbindungselement einen Steckkörper (172) umfasst, der von einer inneren Leitung (174) durchquert wird, jeder Steckkörper umfassend einen röhrenförmigen vorderen Abschnitt (176) und einen hinteren Abschnitt (178),
- wobei jeder hintere Abschnitt (178) in einer jeweiligen inneren Öffnung (150; 550) des Flanschs aufgenommen ist, während jeder röhrenförmige vordere Abschnitt (176) an der Vorderseite des Flanschs durch eine Öffnung (130; 430) des Deckels hervorsteht, wobei jeder Steckkörper (172) konfiguriert ist, um an der Vorderseite an dem Flansch anzuliegen,
- jeder röhrenförmige Vorderteil (176) konfiguriert ist, um mit einem komplementären Fluidverbindungselement (370), das zu der Platte (300) gehört, gekoppelt zu werden,
- der innere Kanal (174) von jedem Steckkörper ständig in Fluidverbindung mit der hinteren Mündung (152) der entsprechenden inneren Öffnung (150; 550) ist,
**dadurch gekennzeichnet, dass**:
- der Flansch (140; 440; 540) in der montierten Konfiguration der Verbindungsanordnung (100; 400; 500) in Bezug auf den Deckel (120; 520) nur gemäß einer Bewegung verschiebbar ist, die von der Querebene (P140) getragen wird,
- die Verbindungsanordnung für jeden Steckkörper (172) eine zweite Dichtung (188) umfasst, die radial zwischen jeden männlichen Körper und einer inneren radialen Fläche (S162) der entsprechenden inneren Öffnung (150; 550) eingefügt ist,
- jeder männliche Körper (172) in der entsprechenden inneren Öffnung (150; 550) mit Möglichkeit zur Neigung in Bezug auf die entsprechende Öffnungsachse (A150) montiert ist.

2. Verbindungsanordnung (100; 400; 500) nach Anspruch 1, **dadurch gekennzeichnet, dass** in einer entkuppelten Konfiguration jeder Steckkörper (172) eine Möglichkeit zur Bewegung in der jeweiligen inneren Öffnung (150; 550) des Flanschs entlang der entsprechenden Öffnungsachse (A150) aufweist.

3. Verbindungsanordnung (100) nach einem der Ansprüche 1 oder 2, **dadurch gekennzeichnet, dass** für jeden Steckkörper (172) eine innere axiale Fläche (163) des Flanschs (140), die die entsprechende innere Öffnung (150) begrenzt, einer hinteren Fläche (184) des Steckkörpers (172) nach vorne zugewandt ist.

4. Verbindungsanordnung (100; 400; 500) nach einem der Ansprüche 1 bis 3, **dadurch gekennzeichnet, dass** der hintere Abschnitt (178) von jedem Steckkörper (172) einen äußeren Bund (180) umfasst, der in Bezug auf den vorderen rohrförmigen Abschnitt (176) in einer Richtung radial zu einer Mittelachse (A170) des entsprechenden Steckkörpers hervorstehend ausgebildet ist, und dass jede zweite Dichtung (188) radial zwischen dem Flansch (140; 440; 540) und dem entsprechenden äußeren Bund eingefügt ist.

5. Verbindungsanordnung (100) nach Anspruch 4, **dadurch gekennzeichnet, dass** der Flansch (140) mindestens einen hinteren Körper (162) und einen vorderen Körper (160) umfasst, die ineinander aufgenommen sind, wobei der hintere Körper (162) die hintere Mündung (152) der inneren Öffnung (150) begrenzt, der vordere Körper (160) die vordere Fläche (142) des Flanschs begrenzt, wobei der äußere Bund (180) des Steckkörpers (172) entlang der Öffnungsachse (A150) zwischen dem vorderen Körper (160) und dem hinteren Körper (162) montiert ist.

6. Verbindungsanordnung (100) nach Anspruch 5, **dadurch gekennzeichnet, dass** jede erste Dichtung (166) in Längsrichtung zwischen einer Oberfläche des hinteren Körpers (162), der die hintere Oberfläche (144) des Flansches (140) begrenzt, und dem Träger (110) eingefügt ist, wobei jede erste Dichtung (166) vorzugsweise in einer entsprechenden Nut (164) aufgenommen ist, die in dem hinteren Körper (162) ausgebildet ist.

7. Verbindungsanordnung (100) nach einem der Ansprüche 5 oder 6, **dadurch gekennzeichnet, dass** jede zweite Dichtung (188) radial zwischen einer radialen Innenfläche (S162) der inneren Öffnung (150), die an dem hinteren Körper (162) des Flanschs (140) gebildet ist, und dem äußeren Flansch eingefügt ist, wobei jede zweite Dichtung (188) vorzugsweise in einer jeweiligen äußeren Umfangsnut (186) des äußeren Bunds (180) aufgenommen ist.

8. Verbindungsanordnung (100) nach einem der Ansprüche 5 bis 7, **dadurch gekennzeichnet, dass** der Flansch (140) mindestens einen hinteren Körper (162) pro fluidischem Element (170) umfasst, wobei jeder hintere Körper in einem jeweiligen zylindrischen Hohlraum (V140) aufgenommen ist, der in dem vorderen Körper (160) des Flanschs (140) ausgebildet ist.

9. Verbindungsanordnung (100; 400; 500) nach einem der Ansprüche 4 bis 8, **dadurch gekennzeichnet,**
- **dass** die innere Öffnung (150; 550) ein erstes Volumen (V160) umfasst, das von einer ersten radialen Innenfläche (S160) des Flanschs (140; 440; 540) begrenzt wird, den röhrenförmigen vorderen Abschnitt (176) teilweise aufnimmt und nach vorne an der Vorderfläche (142) des Flanschs und nach hinten an einem zweiten Volumen (V162) der inneren Öffnung mündet, wobei das zweite Volumen von einer zweiten radialen Innenfläche (S162) des Flanschs begrenzt ist und den äußeren Bund (180) aufnimmt, und
- **dass** eine Länge (L1) der ersten inneren radialen Fläche (S160) größer ist als eine Länge (L2) der zweiten inneren radialen Fläche (S162).

10. Verbindungsanordnung (100) nach einem der Ansprüche 1 bis 9, **dadurch gekennzeichnet, dass** jedes fluidische Verbindungselement (170) Folgendes umfasst:
- ein Ventil (190), das in dem inneren Kanal (174) in Bezug auf den Steckkörper (172) beweglich ist,
- eine Feder (196), die in dem inneren Kanal untergebracht ist und das Ventil in eine geschlossene Position des inneren Kanals drückt, in der das Ventil in dichtendem Kontakt mit dem rohrförmigen vorderen Abschnitt (176) ist und den inneren Kanal verschließt, und
- einen Schnittstellenring (194), der in dem inneren Kanal aufgenommen ist,
und dass in einer montierten Konfiguration der Verbindungsanordnung (100; 400; 500) die Feder rückseitig an dem Schnittstellenring anliegt, der seinerseits rückseitig an dem Flansch (140) anliegt.

11. Verbindungsanordnung (100) nach einem der Ansprüche 1 bis 10, **dadurch gekennzeichnet, dass** de hintere Mündung (152) von der Öffnungsachse (A150) der entsprechenden inneren Öffnung (150) nach hinten abweicht.

12. Verbindungsanordnung (100) nach einem der Ansprüche 1 bis 11, **dadurch gekennzeichnet, dass** in einer montierten Konfiguration der Verbindungsanordnung ein minimaler Abstand (Δ1) zwischen zwei benachbarten ersten Dichtungen (166) größer ist als eine maximale Auslenkung (J1+J2) des Flanschs (140) in Bezug auf den Deckel (120) in einer Richtung parallel zu der Querebene (P140).

13. Verbindungsanordnung (100; 400; 500) nach einem der Ansprüche 1 bis 12, **dadurch gekennzeichnet, dass** in einer entkuppelten Konfiguration jede zweite Dichtung (188) den entsprechenden Steckkörper (172) in eine Position vorspannt, in der eine Mittelachse (A170) des Steckkörpers (172) im Wesentlichen mit der entsprechenden Öffnungsachse (A150) ausgerichtet ist.

14. Verbindungsanordnung (100; 400) nach einem der Ansprüche 1 bis 13, **dadurch gekennzeichnet, dass** der Deckel (120) Folgendes umfasst:
- eine Schürze (124), die einen Aufnahmesitz (V120) für den Flansch (140; 440) radial zu der Längsrichtung begrenzt, und
- eine Vorderwand (122), die mindestens so viele Öffnungen (130; 430) aufweist, wie die Verbindungsanordnung röhrenförmige vordere Abschnitte (176) umfasst.

15. Temperaturregelanordnung (200), insbesondere zur Kühlung, umfassend:
- einen Träger (110), in dem mindestens zwei Leitungsausgänge (114A, 114B; 114C) ausgebildet sind,
- eine Verbindungsanordnung (100; 400; 500) nach einem der Ansprüche 1 bis 14, wobei der Deckel (120; 520) in der montierten Konfiguration der Verbindungsanordnung (100; 400; 500) an der Halterung befestigt ist, und
- eine Platte (300), an der mindestens zwei komplementäre Verbindungselemente (370) befestigt sind, die jeweils konfiguriert sind, um mit einem jeweiligen fluidischen Verbindungselement (170) der Verbindungsanordnung zusammenpassen.

## Claims

1. A connection assembly (100; 400; 500) configured for being coupled to a plate (300) and comprising:
- a flange (140; 440; 540) crossed through by at least two internal orifices (150; 550), each of which is centered on an orifice axis (A150), the orifice axes being parallel to each other, the flange comprising a front surface (142) oriented forward in a longitudinal direction parallel to the orifice axes (A150) and a rear surface (144) oriented backward, the front and rear surfaces being parallel to a transverse plane (P140), which is transverse to the orifice axes (A150),
- a cover (120; 520) configured for being attached to a support (110) in a mounted configuration of the connection assembly, the support including piping outlets (114A, 114B; 114C), each piping outlet being associated with a corresponding internal orifice (150; 550),
wherein:
- in the mounted configuration of the connection assembly, the rear surface (144) of the flange is situated opposite a front face (112) of the support (110) along the longitudinal direction, while the front surface (142) of the flange is situated opposite a rear surface (128) of the cover along the longitudinal direction,
- each internal orifice ((150; 550) comprises a rear opening (152), which comes out to the rear surface (144) of the flange and is in fluidic communication with the corresponding piping outlet (114A, 114B; 114C),
- the connection assembly further comprises:
• first gaskets (166), which, in the mounted configuration of the connection assembly, are interposed between the rear surface (144) of the flange and the front face (112) of the opposite support, each first gasket surrounding a corresponding piping outlet (114A, 114B; 114C) and the associated rear opening (152),
• at least two fluidic coupling elements (170), each fluidic coupling element comprising a male body (172) crossed by an internal piping (174) therethrough, each male body comprising a tubular front portion (176) and a rear portion (178),
- each rear portion (178) is received in a corresponding internal orifice (150; 550) of the flange, whereas each tubular front portion (176) extends over the front of the flange through an opening ((130); 430) of the cover, each male body (172) being configured for abutting on the front against the flange,
- each tubular front portion (176) is configured for being coupled to a matching fluidic coupling element (370) belonging to the plate (300),
- the internal piping (174) of each male body is in permanent fluidic communication with the rear opening (152) of the corresponding internal orifice (150; 550),
**characterized in that**:
- in the mounted configuration of the connection assembly (100; 400; 500), the flange (140; 440); 540) can be moved with respect to the cover (120; 520) only in a movement supported by the transverse plane (P140),
- for each male body (172), the connection assembly comprises a second gasket (188) which is interposed radially between each male body and an internal radial surface (S162) of the corresponding internal orifice (150; 550),
- each male body (172) is mounted in the corresponding internal orifice (150; 550) and can be tilted with respect to the corresponding orifice axis (A150).

2. The connection assembly (100; 400; 500) according to claim 1, **characterized in that**, in the uncoupled configuration, each male body (172) can be moved in the corresponding internal orifice (150; 550) of the flange along the corresponding orifice axis (A150).

3. The connection assembly (100) according to any one of claims 1 or 2, wherein, for each male body (172), an internal axial surface (163) of the flange (140) which delimits the corresponding internal orifice (150) is opposite the front of a rear surface (184) of the male body (172).

4. The connection assembly (100; 400; 500) according to any one of claims 1 to 3, **characterized in that** the rear portion (178) of each male body (172) comprises an external collar (180) protruding from the tubular front part (176) along a radial direction to a central axis (A170) of the corresponding male body, and **in that** each second gasket (188) is interposed radially between the flange (140; 440; 540) and the corresponding external collar.

5. The connection assembly (100) according to claim 4, **characterized in that** the flange (140) comprises at least one rear body (162) and a front body (160), which are housed one inside the other, the rear body (162) delimiting the rear opening (152) of the internal orifice (150), the front body (160) delimiting the front surface (142) of the flange, the external collar (180) of the male body (172) being mounted along the orifice axis (A150) between the front body (160) and the rear body (162).

6. The connection assembly (100) according to claim 5, **characterized in that** each first gasket (166) is interposed longitudinally between a surface of the rear body (162) delimiting the rear surface (144) of the flange (140) and the support (110), each first gasket (166) being preferentially housed in a corresponding groove (164) provided in the rear body (162).

7. The connection assembly (100) according to any one of claims 5 or 6, **characterized in that** each second gasket (188) is interposed radially between an internal radial surface (S162) of the internal orifice (150) formed on the rear body (162) of the flange (140) and the external collar, each second gasket (188) being preferentially housed in a corresponding external peripheral groove (186) of the external collar (180).

8. The connection assembly (100) according to any one of claims 5 to 7, wherein the flange (140) comprises at least one rear body (162) per fluidic coupling element (170), each rear body being housed in a corresponding cylindrical cavity (V140) provided in the front body (160) of the flange (140).

9. The connection assembly (100; 400; 500) according to any one of claims 4 to 8, **characterized**:
- **in that** the internal orifice (150; 550) comprises a first volume (V160) delimited by a first internal radial surface (S160) of the flange (140; 440; 540), partially housing the tubular front part (176) and coming out forward at the front surface (142) of the flange and rearward at a second volume (V162) of the internal orifice, the second volume being delimited by a second internal radial surface (S162) of the flange and housing the external collar (180), and
- **in that** a length (L1) of the first internal radial surface (S160) is greater than a length (L2) of the second internal radial surface (S162).

10. The connection assembly (100) according to any one of claims 1 to 9, **characterized in that** each fluidic coupling element (170) comprises:
- a valve (190) which can move inside the internal piping (174) with respect to the male body (172),
- a spring (196), housed in the internal piping and which pushes the valve back into a closing position of the internal piping, wherein the valve is in leak-tight contact with the tubular front portion (176) and closes the internal piping, and
- an interface ring (194), received in the internal piping,
and **in that**, in the mounted configuration of the connection assembly ((100; 400; 500), the spring is resting at the rear on the interface ring which itself rests at the rear against the flange (140).

11. The connection assembly (100) according to any one of claims 1 to 10, **characterized in that** the rear opening (152) diverges backwards from the orifice axis (A150) of the corresponding internal orifice (150).

12. The connection assembly (100) according to any one of claims 1 to 11, **characterized in that**, in the mounted configuration of the connection assembly, a minimum distance (Δ1) between two adjacent first gaskets (166) is greater than a maximum clearance (J1+J2) of the flange (140) with respect to the cover (120) along a direction parallel to the transverse plane (P140).

13. The connection assembly (100; 400; 500) according to any one of claims 1 to 12, **characterized in that**, in the uncoupled configuration, each second gasket (188) returns the corresponding male body (172) into a position wherein a central axis (A170) of the male body (172) is substantially aligned with the corresponding orifice axis (A150).

14. The connection assembly (100; 400) according to any one of claims 1 to 13, **characterized in that** the cover (120) comprises:
- a skirt (124) which delimits a receiving housing (V120) for the flange (140; 440) radially to the longitudinal direction, and
- a front wall (122), which comprises at least as many openings ((130; 430) as the connection assembly comprises tubular front portions (176).

15. A thermoregulation assembly (200), in particular for cooling, comprising:
- a support (110), wherein at least two piping outlets (114A, 114B; 114C) are provided,
- the connection assembly (100; 400; 500) according to any one of claims 1 to 14, the cover (120; 520) being attached to the support in the mounted configuration of the connection assembly (100; 400; 500), and
- a plate (300), to which are attached at least two matching coupling elements (370), each configured for mating with a corresponding fluidic coupling element (170) of the connection assembly.
